# EUROPEAN PATENT APPLICATION

(11) **EP 2 560 391 A1**
(43) Date of publication of application: **20.02.2013**
(21) Application number: 11006710.5
(22) Date of filing: 17.08.2011
(51) Int. Cl.: H04N 9/04, H04N 5/374

(54) **imaging system in a motor vehicle, and corresponding imaging method**

(71) Applicant: Autoliv Development AB, 44783 Vårgårda (SE)
(72) Inventor: Lindgren, Leif, 58336 Linköping (SE)
(74) Representative: Müller Verweyen

(57) **Abstract**

An imaging system (10) and a corresponding imaging method in a motor vehicle comprises an imaging means (11), a semiconductor image sensor array (21), comprising a silicon substrate (24) and a plurality of doped regions (27,28;32,33) arranged at different depths dS, dL in said silicon substrate (24) in order to form photodiodes (25,26) having different spectral sensitivities. The image sensor array (21) comprises doped regions (27,28;32,33) arranged at two different depths dS, dL, only, in order to achieve two different spectral sensitivities of said photodiodes (25,26), only.

## Description

The invention relates to an imaging system in a motor vehicle, comprising an imaging means, comprising a semiconductor image sensor array, comprising a silicon substrate and a plurality of doped regions arranged at different depths in said silicon substrate in order to form photodiodes having different spectral sensitivities. The invention furthermore relates to an imaging method for a motor vehicle using such an imaging system.

Imaging systems for motor vehicles are generally known, see for example EP 2 254 091 A1. Furthermore different types of image sensor arrays are known, see for example US 2010 / 0134616 A1 or US 5 965 875 A. Due to the needs of an imaging system in a motor vehicle a compromise between costs, image quality, suitability for night vision and automated image processing with limited processing resources has to be found.

The object of the invention is to provide a suitable and cost-efficient imaging system in a motor vehicle.

The invention solves this object with the features of the independent claims. The invention has realized that only two different spectral sensitivities of photodiodes in the image sensor array are generally sufficient to fulfill the requirements of an automotive imaging system. The invention takes into account that imaging systems in automotive applications must enable certain color detection for recognizing the traffic specific information within an image, but do not need a full or essentially full color spectrum. Thus, grayscale imaging would be insufficient to provide color detection, where full color detection does not give much advantage in typical automotive applications. The features of the invention allow to reduce the number of photodiodes and readout circuits on an image sensor array significantly compared to the prior art, for example by one third, resulting in a smaller and more cost-efficient image sensor array.

According to the invention an imaging systems in a motor vehicle includes an imaging means comprising an image sensor array made of a silicon substrate, which has a plurality of doped regions arranged at different depths, in order to form photodiodes at p-n junctions. These photodiodes have different spectral sensitivities due to their different distance to the surface of the silicon substrate. In silicon the probability of absorption of a photon depends on both depth and the wavelength of the light. Shorter wavelengths have higher probability of absorption at lower depths, while longer wavelengths have higher probability of absorption at higher depths. Thus, different wavelengths can be measured at different depths with photodiodes.

Preferably one kind of photodiodes is formed in a depth in the silicon substrate that corresponds to wavelengths of blue to green light, i.e. the peak of the spectral response of the photodiodes is assigned to blue to green light. This enables a good detection of e.g. green traffic lights. For similar reasons, photodiodes with a preferred peak spectral sensitivity to light with a wavelength shorter than 600 nm comprise similar advantages.

Preferably another kind of photodiodes is formed in a depth in the silicon substrate that this kind of photodiodes is mainly sensitive to wavelengths of red to infrared light, i.e. the peak of the spectral response of the photodiodes is assigned to red to infrared light. This is suitable for the detection of e.g. red traffic lights or backlights of motor vehicles. For similar reasons, photodiodes with a peak spectral sensitivity to light with a wavelength longer than 600 nm, more preferably longer than 700 nm, even more preferably longer than 750 nm respectively have similar advantages.

Detection of infrared light is particularly preferable for a night vision system, wherein infrared light in particular means light with a wavelength longer than 780 nm. The image sensor array is in particular suited for near infrared light from 780 nm to 1000 nm.

The combination of two depths of photodiodes as described in the foregoing is advantageous because it allows a sufficient determination of color information suitable for automotive applications, e.g. separating a red break light from a white head light, or determining colors of traffic signs and traffic lights.

Preferably the image sensor array comprises a double well structure that is formed essentially for every pixel of the image sensor array. Hence, the two photodiodes are advantageously stacked within the substrate which is advantageous to reduce the general sensor size and provide some color information in every pixel, thereby in particular reducing the aliasing of the two photodiodes while increasing the quantum efficiency. Light with a longer wavelength than the photo sensitivity of the upper photodiode reaches the photodiode beneath with appropriate photo sensitivity.

Preferably each pixel of said image sensor array comprises two readout circuits to measure the photo currents of the two photodiodes formed by said doped regions.

The invention is preferably applicable to night vision systems comprising an infrared light source for illuminating the scenery. The said two kinds of spectral sensitivity are preferably adapted to night vision. The photodiodes with spectral sensitivity to longer wavelengths, for example red to infrared light, form a good night vision grayscale image while the photodiodes with spectral sensitivity to shorter wavelengths, for example blue to green light, give an additional color information of strong light sources in the image like traffic signs or traffic lights. This is not possible with traditional sensors with RCCC filters, see for example US 2010 / 0134616 A1, since the red pixels and the clear pixels have almost identical response curves from around 575 nm to short wavelength.

The infrared light source can be operated in pulsed mode, i.e. the illumination level of at least one infrared light source is varied in a cyclic manner leading to an image with further improved color information of bright light sources when the infrared illumination is at low level or off while still giving a good grayscale image when the infrared illumination is at high level or on.

In the following the invention shall be illustrated on the basis of preferred embodiments with reference to the accompanying drawings, wherein:
- Fig. 1: shows a schematic diagram of a vision system for a motor vehicle;
- Fig. 2: shows a partial cross-section of a pixel of an image sensor array of a vision system;
- Fig. 3: shows a partial cross-section of a pixel of an image sensor array with a double well structure; and
- Fig. 4: shows a schematic diagram of a vision system for motor vehicle with additional infrared lights.

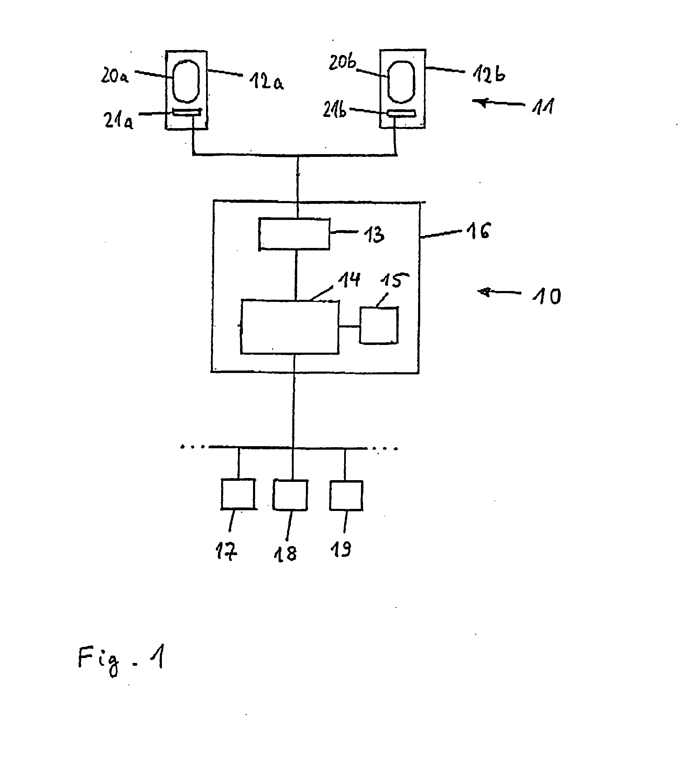

In Fig. 1 a schematic diagram of a vision system 10 for a motor vehicle is shown. The vision system 10 is mounted in a motor vehicle and comprises an imaging means 11 for detecting images of a region surrounding the motor vehicle, for example a region in front of the motor vehicle. Preferably the imaging means 11 comprises two cameras 12a, 12b forming a stereo imaging means 11; alternatively only one camera forming a mono imaging means can be used.

Each camera 12a, 12b comprises an optics arrangement 20a, 20b and a two dimensional semiconductor image sensor array 21a, 21b, provided to convert incident infrared and/or visible light transmitted through the camera 12a, 12b into an electrical signal containing image information of the detected scene.

The cameras 12a, 12b are coupled to an image pre-processor 13 adapted to control the capture of images by the cameras 12a, 12b, receive the electrical signal containing the image information from the image sensor array 21a, 21b, warp pairs of left/right images into alignment and create disparity images, which per se is known in the art. The image pre-processor 13 may be realized as a dedicated hardware circuit. Alternatively the pre-processor 13, or part of its functions, can be realized in the electronic processing means 14. In case of a vision system using only one camera the pre-processor 13 is not needed.

The pre-processed image data is then provided to an electronic processing means 14 where further image and data processing is carried out by corresponding software. In particular, the image and data processing in the processing 14 comprises the following functions: identification and classification of possible objects in front of the motor vehicle, such as other motor vehicles, pedestrians, bicyclist or large animals; tracking over time the position of identified object candidates in the detected images; activation or control of vehicle safety means 17, 18, 19 - depending on the result of the object detection and tracking processing.

The vehicle safety means 17, 18, 19 may comprise a warning means 17 adapted to provide a collision warning to the driver by suitable optical, acoustical and/or haptical warning signals; display means 18 for displaying information relating to an identified object; one or more restraint systems 19 such as occupant airbags or safety belt tensioners; pedestrian airbags, hood lifters and the like; and/or dynamic vehicle control systems such as brakes.

The electronic processing means 14 expediently has access to a memory means 15.

The electronic processing means 14 is preferably programmed or programmable and may comprise a microprocessor or microcontroller. The image pre-processor 13, the electronic processing means 14 and the memory means 15 are preferably realized in an onboard electronic control unit (ECU) 16 and may be connected to the cameras 12a, 12b preferably via a separate cable or alternatively via a vehicle data bus. In another embodiment, the ECU and a camera 12a, 12b can be integrated into a single unit. All steps from imaging, image pre-processing, image processing to activation or control of safety means 17, 18, 19 are performed automatically and continuously during driving in real time.

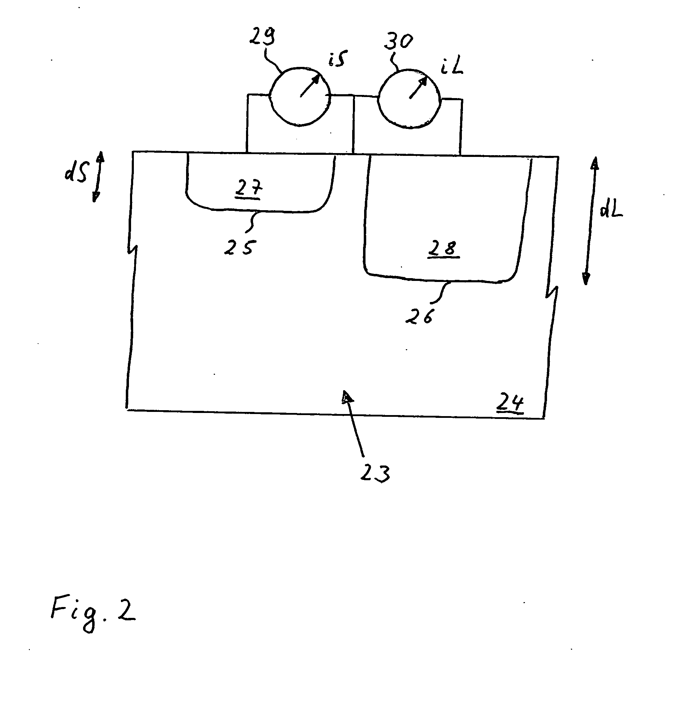

In the example of Fig. 2 a partial cross-section of a pixel 23 of an image sensor array 21a, 21b is shown. Well structures are formed in a silicon substrate 24 in a way that two photodiodes 25, 26 with different spectral response are arranged side by side. Therefore the photodiodes 25, 26 of each pixel 23 are created by doped regions 27, 28 in the substrate material with two different depths dS, dL. The doped regions 27, 28 are doped in order to create a p-n junction with respect to the silicon substrate or a doped section of said silicon substrate, which surrounds the doped regions 27, 28. In this embodiment the doped regions 27, 28 have preferably the same or similar doping. The photodiode 25 at low depth dS with respect to the substrate's surface gives a spectral response optimized to light with shorter wavelength, e.g. blue to green light, while the photodiode 26 arranged at a deeper level dL within the substrate 24 gives a spectral response optimized to light with longer wavelengths, e.g. red to infrared light. Two measuring units 29, 30 are comprised in order to enable an electronic readout of each photodiode 25, 26. Metering the photocurrent, which is caused by the incident light with a certain wavelength, leads to an electronic image on the image sensor array 21a, 21b, wherein in particular each pixel of the electronic image contains color information. More specifically, the photo current is integrated over the exposure time by a capacitor and the charge or voltage change over the capacitor is measured. The measured image is read out and output e.g. to the image pre-processor 13.

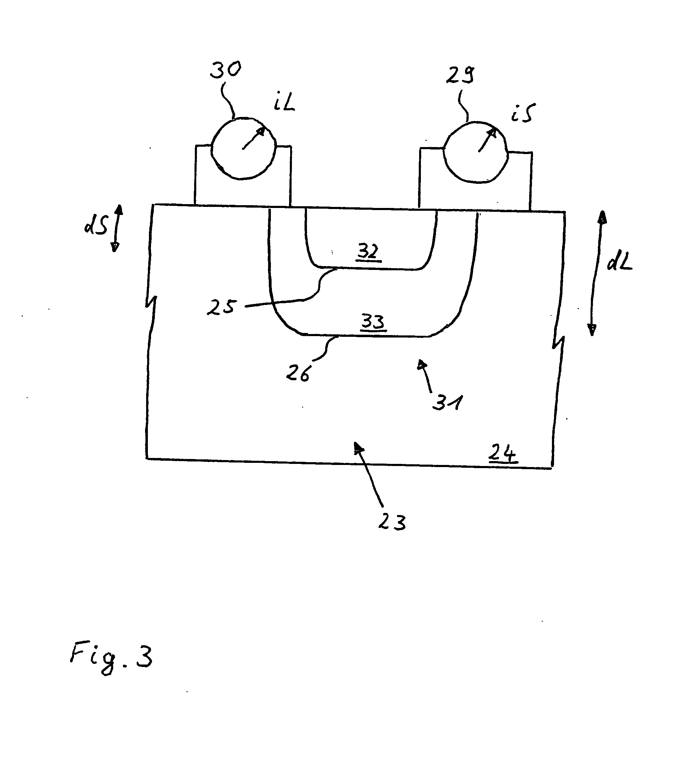

Fig. 3 shows a pixel 23 of an image sensor array 21a, 21b where two different well depths dS, dL are built as a double well structure 31. Thus, two different doped regions 32, 33 are layered in order to create a smaller pixel size with higher quantum efficiency. Aliasing of color information is further reduced. The upper photodiode 25 is created at the junction between the upper doped region 32 and the doped region 33 beneath. A readout circuit of a photo current meter 29 provides a metering of the resulting photocurrent iS during imaging, where the photocurrent is related to light in particular with shorter wavelength compared to a second photodiode 26. The second photodiode 26 is formed deeper, i.e. in depth dL, in the substrate 24 at the junction of a doped region 33 and the silicon substrate 24. The doped regions 32, 33 comprise different doping in order to create a p-n junction. The lower doped region is doped in order to create a p-n junction with respect to the silicon substrate 24 or a doped section of said silicon substrate, which surrounds the lower doped region 33. The corresponding photo current meter 30 is measuring the photo current iL caused by light with longer wavelengths, in particular red to infrared light. The image sensor array 21a, 21b comprises said two photo current meter 29, 30 for each pixel 23. The resulting image is processed by e.g. the image pre-processor 13.

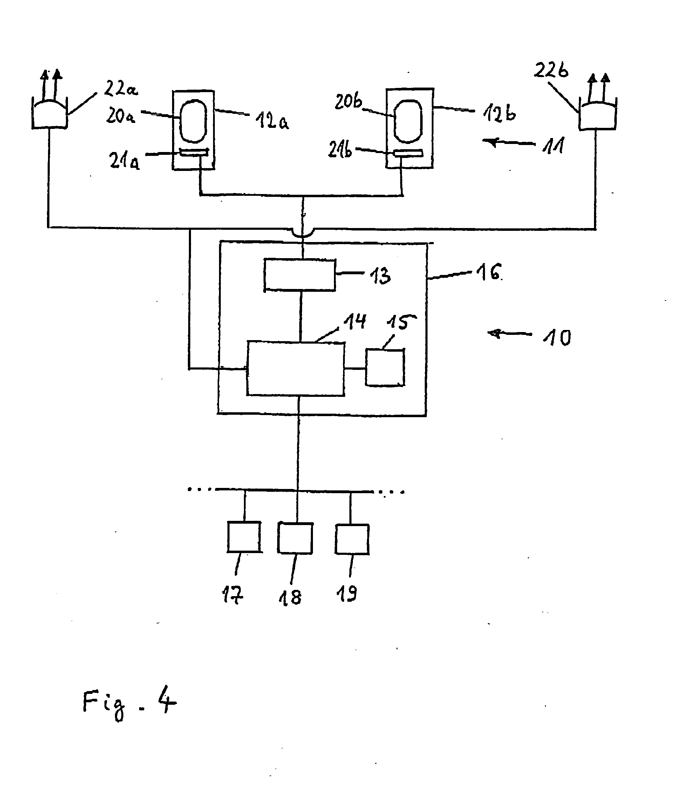

In Fig. 4 shows a schematic diagram of a vision system 10 in a motor vehicle in another embodiment with additional infrared lights 22a, 22b. The vision system 10 may comprise a single or multiple infrared light source 22a, 22b. Preferably two infrared light sources 22a, 22b are comprised in this embodiment. The infrared light sources 22a, 22b illuminate the region around and/or in front of the motor vehicle. In particular the illuminated region is viewed by the camera 12a, 12b in order to improve night vision capabilities of the vision system 10. The surroundings of the motor vehicle reflect the infrared light emitted by the infrared light source 22a, 22b, which is projected by the optics arrangement 20a, 20b of the camera 12a, 12b on the imaging sensor array 21a, 21b. There, incident infrared light is detected by the photodiodes 25, 26 essentially by the photodiodes 26 formed at the deeper depth iL in the substrate 24 and is transformed to an electric signal by the photo current meter 30. Visible light with shorter wavelengths may be detected additionally at the same time by said photodiodes 25 (blue, green) and 26 (red), while the photodiodes 25 formed at a lower depth iS within the substrate 24 are barely sensitive to infrared light and are thus barely influenced by the illumination with infrared light.

In another embodiment also according to Fig. 4, the infrared lights sources 22a, 22b are operated in a pulsed mode. The infrared light sources 22a, 22b are switched on and off, allowing the imaging means 11 to take an image frame of the region viewed by the camera 12a, 12b during a not illuminated phase and a second image frame during the illuminated. The image frame taken during the off phase results in more well-defined colors of especially brighter objects. The on phase is preferably used to create good grayscale images. In this embodiment the infrared light sources 22a, 22b are controlled by the electronic processing means 14. A different feedback of the actual status of the infrared lights may also be possible in a different embodiment.

## Claims

1. An imaging system (10) in a motor vehicle, comprising an imaging means (11), comprising a semiconductor image sensor array (21), comprising a silicon substrate (24) and a plurality of doped regions (27,28;32,33) arranged at different depths dS, dL in said silicon substrate (24) in order to form photodiodes (25,26) having different spectral sensitivities, **characterized in that** said image sensor array (21) comprises doped regions arranged at two different depths dS, DL, only, in order to achieve two different spectral sensitivities of said photodiodes (25,26), only.

2. An imaging system (10) in a motor vehicle as claimed in claim 1, wherein one kind of photodiodes (25) is mainly sensitive to wavelengths of blue to green light.

3. An imaging system (10) in a motor vehicle as claimed in any one of the preceding claims, wherein one kind of photodiodes (26) is mainly sensitive to wavelengths of red to infrared light.

4. An imaging system (10) in a motor vehicle as claimed in any one of the preceding claims, wherein one kind of photodiodes (25) has a peak sensitivity to light with wavelengths shorter than 600 nm.

5. An imaging system (10) in a motor vehicle as claimed in any one of the preceding claims, wherein one kind of photodiodes (26) has a peak sensitivity to light with wavelengths longer than 600 nm.

6. An imaging system (10) in a motor vehicle as claimed in claim 5, wherein one kind of photodiodes (26) has a peak sensitivity to light with wavelengths longer than 700 nm.

7. An imaging system (10) in a motor vehicle as claimed in any one of the preceding claims, wherein double well structures (31) are formed essentially for every pixel (23) of said image sensor array (21).

8. An imaging system (10) in a motor vehicle as claimed in any one of the preceding claims, wherein pixels (23) of said image sensor array (21) comprise two readout circuits (29,30) for the two photodiodes (25,26) formed by said doped regions (27,28;32,33).

9. An imaging system (10) in a motor vehicle as claimed in any one of the preceding claims, comprising at least one infrared light source (22) for illuminating the scenery viewed by the imaging system (10).

10. The imaging system (10) in a motor vehicle as claimed in claim 9, wherein said light source (22) is a pulsed light source.

11. A imaging method for a motor vehicle, comprising the steps of utilizing of a semiconductor image sensor array (21), comprising a silicon substrate (24) and a plurality of doped regions (27,28;32,33) arranged at different depths ds, dL in said silicon substrate (24) in order to form photodiodes (25, 26) having different spectral sensitivities, **characterized in that** said image sensor array (21) comprises doped regions (27,28;32,33) arranged at two different depths dS, dL, only, in order to achieve two different spectral sensitivities of said photodiodes (25,26), only.

12. An imaging method for a motor vehicle as claimed in claim 11, comprising illuminating the scene with at least one infrared light source (22).

13. An imaging method for a motor vehicle as claimed in claim 12, comprising pulsing said infrared light source (22).
